# EUROPEAN PATENT APPLICATION

(11) **EP 2 075 155 A1**
(43) Date of publication of application: **01.07.2009**
(21) Application number: 08171957.7
(22) Date of filing: 17.12.2008
(51) Int. Cl.: B60N 2/427, B60N 2/48

(54) **Seat apparatus for vehicle**

(30) Priority: 26.12.2007 JP 2007333380; 25.06.2008 JP 2008166205
(71) Applicant: AISIN SEIKI KABUSHIKI KAISHA, Kariya-shi, Aichi-ken 448-8650 (JP)
(72) Inventor: Mori, Masatoshi, Kariya-shi Aichi 448-8650 (JP); Satoh, Takanori, Kariya-shi Aichi 448-8650 (JP); Honjo, Hideaki, Kariya-shi Aichi 448-8605 (JP)
(74) Representative: TBK-Patent

(57) **Abstract**

A seat apparatus for a vehicle includes a headrest body (13), a stay (14), a pressure receiver (30), a moving force transmitting mechanism (31), and a headrest moving unit (65), wherein the moving force transmitting mechanism (31) includes an input link member (33), an output link member (34) operating the headrest moving unit (65), an operation member (35, 135) linked with the input link member (33) and the output link member (34) to be movable between initial and operating positions, the operating member (35, 135) preventing the output link member (34) from following the rotation of the input link member (33) in the initial position and allowing the output link member (35) to follow the rotation of the input link member (33) in a case that the operation member (35, 135) is moved to the operating position when the impact load is exerted at the initial position.

## Description

### FIELD OF THE INVENTION

The invention relates to a seat apparatus for a vehicle serving a protective function for an occupant's neck when the vehicle is struck in a rear thereof.

### BACKGROUND

A seat for a vehicle, serving a protective function for an occupant's neck when receiving a large impulsive force transmitted from a rear to a front of a vehicle, in other words, when the vehicle is struck in the rear, is disclosed in JP 2006-56359A. In the seat for the vehicle disclosed in JP 2005-56359A, when an occupant is pressed against the seatback during the collision, a pressure receiver is moved rearward against a biasing force of a spring due to an input load exerted by the occupant. Consequently, a cable is pulled through an accelerating unit, thereby raising a headrest in a diagonally forward direction. Then, the headrest restrains and protects the occupant's head.

In the seat for the vehicle disclosed in paragraphs 0042 to 0047 and Fig. 2 of JP 2006-56359A, the headrest is moved upward when an impact load is exerted on the seatback, Thus, the system may be operated when the operation is not needed, in other words, when the collision (rear-end collision) does not occur, and malfunctions occur frequently Namely, in the seat for the vehicle disclosed in JP 2006-56359A, for example, when an occupant with large body frame plops down thereon or when an occupant pushes the seatback strongly with his / her knee or elbow, a pressure receiver is moved rearward and the headrest may be operated improperly.

A need exists for a seat for a vehicle which activates a headrest when an impact load caused by a rear-end collision and an input load exerted by an occupant are exerted.

### SUMMARY OF THE INVENTION

According to a first aspect of the present invention, a seat apparatus for a vehicle includes a headrest body located above a seatback of a vehicle seat, a stay supporting the headrest body on the seatback, a pressure receiver disposed in the seatback and moved due to an input load exerted by an occupant seated on the vehicle seat, a moving force transmitting mechanism disposed at a lower position of the seatback and transmitting a moving force of the pressure receiver when an impact load is exerted on the seatback in a rear-end collision and the pressure receiver is moved, and a headrest moving unit moving the headrest body to a protection position when the moving force is transmitted by the moving force transmitting mechanism, wherein the moving force transmitting mechanism includes an input link member rotated in association with a movement of the pressure receiver, an output link member rotatably supported by the input link member and connected with the headrest moving unit, the output link member rotating in conjunction with the rotation of the input link member to operate the headrest moving unit, an operation member linked with the input link member and the output link member so as to be movable between an initial position and an operating position, the operating member preventing the output link member from following the rotation of the input link member in the initial position and allowing the output link member to follow the rotation of the input link member in case that the operation member is moved to the operating position when the impact load is exerted on the seatback in the rear-end collision against a biasing force of a biasing member holding the operation member in the initial position.

According to the above-described configuration, the operation member is moved to a position that the input link member is operable, i.e. an operating position, only when the impact load due to the rear-end collision is exerted on the seatback. If the impact load is not exerted, the operation member is positioned at the initial position. Thus, when the seatback is strongly pressed due to the input load exerted by the occupant in the state that the impact load is exerted, the output link member follows the rotation of the input link member to rotate. Then, the headrest moving unit is operated to move the headrest body to the protection position. Namely, even though the occupant exerts a strong load on the seatback in the situation that the impact load is not exerted, the output member does not follow the rotation of the input link member because the operation member is positioned at the initial position.
Thus, the headrest moving unit is not operated. Therefore, the malfunction that the headrest body is mistakenly moved to the protection position by seating actions of the occupant is assuredly prevented.

Further, the moving force transmitting mechanism is disposed at a lower portion of the seatback. Thus, the impact load exerted on the vehicle in the rear-end collision is promptly detected, and the operation member is operated. Therefore, the headrest body is promptly moved to the protection position.

According to a second aspect of the present invention, the operation member is formed by the operation link member rotatably supported by the output link member and linked with the input link member in a manner that the operation link member is pivotably movable between the initial position and the operating position.

Thus, the impact load, exerted to the vehicle body in the rear-end collision, is directly input to the output link member. Therefore, the impact load is transmitted to the operation member without loss, and the responsiveness is improved.

According to a third aspect of the present invention, the operation member is formed by the operation link member rotatably supported by the input link member and linked with the output link member in a manner that the operation link member is pivotably movable between the initial position and the operating position.

According to the above-described configuration, the operation member is formed by the operation link member rotatably supported by the input link member and linked with the output link member in a manner that the operating link member is pivotably movable between the initial position and the operating position. Thus, an effect, which is similar to the one described above is achieved when the operation link member is rotated by the impact load due to the rear collision.

According to a fourth aspect of the present invention, the operation link member includes the engaging groove having the cancel groove and the transmitting groove, and the input link member includes the engaging portion engaging with the engaging groove. Further, the engaging portion engages with the cancel groove when the operation link member is positioned at the initial position and the input link member is rotated, and the engaging portion engages with the transmitting groove when the operation link member is positioned at the operating position and the input link member is rotated.

Thus, when the occupant is roughly seated, or when the seatback is strongly pressed by the occupant's knee or elbow, the engaging portion of the input link member enters the cancel groove. Accordingly, the rotation of the input link member is not transmitted to the output link member, thus preventing the malfunction assuredly.

According to a fifth aspect of the present invention, the output link member includes the engaging groove having the cancel groove and the transmitting groove, and the operation link member includes the engaging portion engaging with the engaging groove. Further, the engaging portion engages with the cancel groove when the operation link member is positioned at the initial position and the input link member is rotated, and the engaging portion engages with the transmitting groove when the operation link member is positioned at the operating position and the input link member is rotated.

Thus, when the occupant is roughly seated, or when the seatback is strongly pressed by the occupant's knee or elbow, the engaging portion of the input link member enters the cancel groove. Accordingly, the rotation of the input link member is not transmitted to the output link member, thus preventing the malfunction assuredly.

According to a sixth aspect of the present invention, the operation member is formed by the operation member having the weight includes axial portions at both ends thereof, and the axial portions at both ends of the operation member having the weight slidably engage with the engaging groove of the output link member and the elongated groove of the input link member, respectively.

Thus, when the occupant is roughly seated, or when the seatback is strongly pressed by the occupant's knee or elbow, the malfunction is prevented by the operation member having the weight.

According to a seventh aspect of the present invention, the engaging groove includes the stepwise wide portion at the connecting portion between the cancel groove and the transmitting groove.

Thus, when a heavyweight person is seated, the engaging portion ofthe operation link member slightly enters the cancel groove. Even in that state, if the impact load is exerted on the seatback in the rear-end collision, the engaging portion of the operation link member is moved to the wide portion. Thereafter, the input load from the occupant is strongly exerted on the seatback, thereby rotating the output link member through the stepwise portion of the wide portion.

According to an eighth aspect of the present invention, the depth of the cancel groove is determined so as to correspond to the moving amount of the engaging portion of the operation link member when the input load is exerted on the seatback by the heavyweight occupant.

Thus, when the heavyweight occupant is seated, the engaging portion of the operation link member engages with the bottom portion of the cancel groove by the input load of the occupant in the rear-end collision, and the output link member is directly rotated.

According to a ninth aspect of the present invention, the biasing member biasing the operation link member is disposed so as to form the acute angle with respect to the line connecting the rotation center of the operation link member with the hook portion that the biasing member is hooked, and the moment exerting on the operation link member in the initial position is reduced in conjunction with the rotation of the operation link member.

Thus, the operation link member is promptly rotated by the impact load exerted on the vehicle body in the rear-end collision.

### BRIEF DESCRIPTION OF THE DRAWING

The foregoing and additional features and characteristics of the present invention will become more apparent from the following detailed description considered with reference to the accompanying drawings, wherein:

Fig. 1 is a perspective view of a seat apparatus for a vehicle according to a first embodiment of the invention;

Fig. 2 is a perspective view showing an inside of a seatback of the seat apparatus for the vehicle shown in Fig. 1;

Fig. 3A is a view for explaining operation of a lock link member and a slide member and showing a locked state in which movement of the slide member is retrained by the lock link member;

Fig. 3B is a view for explaining operation of the lock link member and the slide member and showing an unlocked state in which movement restriction of the slide member is released;

Fig. 4 is an enlarged view of a main section of Fig. 2 showing a moving force transmitting mechanism;

Fig. 5 is an exploded view of the moving force transmitting mechanism shown in Fig. 4;

Fig. 6 is a view showing an output link member;

Fig. 7 is a view showing a first modification of a first embodiment;

Fig. 8 is a view showing a second modification of the first embodiment;

Fig. 9 is a view showing a moving force transmitting mechanism according to a second embodiment;

Fig. 10 is an exploded view of the moving force transmitting mechanism shown in Fig. 9;

Fig. 11 is a view of the moving force transmitting mechanism shown in Fig. 9 when viewed from a direction indicated by an arrow 11;

Fig. 12 is a view of the moving force transmitting mechanism in a different operating state;

Fig. 13 is an explanatory view showing a moment exerting on an operation member according to the second embodiment;

Fig. 14 is a schematic view of Fig. 13;

Fig. 15 is a view showing a first modification of the second embodiment;

Fig. 16 is a view showing a second modification of the second embodiment; and

Fig. 17 is an exploded view showing a moving force transmitting mechanism according to a third embodiment of the invention.

### DETAILED DESCRIPTION

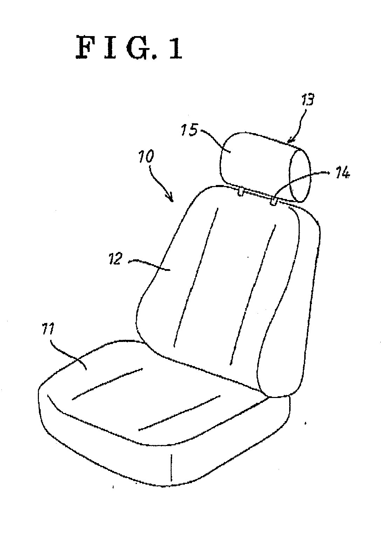

A seat apparatus for a vehicle according to a first embodiment will be described with drawings. In Fig. 1, the seat apparatus for the vehicle 10 includes a seat cushion 11, a seatback 12 and a headrest 13. The headrest 13 includes a pair of left and right stays 14 and a headrest body 15. The pair of stays 14 is movable in an up-down direction, and the headrest body 15 is attached to upper ends of the stays 14.

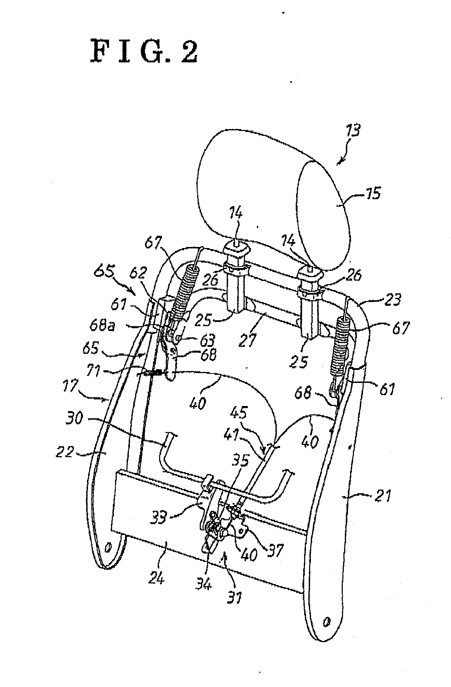

As shown in Fig. 2, the seatback 12 has a seatback frame 17 inside thereof A pair of left and right side frames 21 and 22, an upper frame 23, and a lower frame 24 are connected to each other by welding, thereby forming the seatback frame 17. A pair of left and right stay holders 25 are arranged in parallel to each other and extends in the up-down direction. Each stay holder 25 is held at a center of an upper frame 23 by a holding member 26 so as to move in the up-down direction.

A guide bracket, which will be described below, guides and supports each end portion of a sub frame 27 at the upper frame 23 of the seatback frame 17 in a manner that the end portion moves a predetermined distance in the up-down direction. A lower portion of each stay holder 25 is secured at the center of the sub frame 27. Each stay 14 is inserted into the corresponding stay holder 25 so as to slide in the up-down direction and is held at a predetermined height by a known notch mechanism.

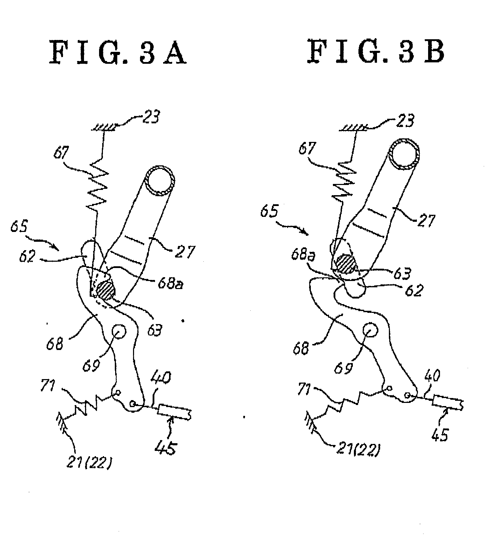

Left and right guide brackets 61, forming a pair, are respectively fixed to end portions of the upper frame 23 of the seatback frame 17. As shown in Fig. 3, an inclined guide hole 62, linearly extending in the up-down direction, is formed in each guide bracket 61. A slide member 63 such as a slide pin is provided at an end portion of each sub frame 27 and slidably engages with the guide hole 62 of each guide bracket 61.

A headrest moving unit 65 (headrest moving unit) is disposed at the seatback frame 17 to move the headrest 13 to a protection position relative to the seatback 12 in a vehicle collision (rear-end collision). The headrest moving unit 65 includes an extension spring 67, a lock link member 68, and a cable 45. The extension spring 67 biases the sub frame 27, to which the headrest 13 is fixed, in an upward direction, and the lock link member 68 restricts the upward movement of the headrest 13 due to a biasing force of the extension spring 67. One end of the cable 45 connects with each lock link member 68.

The two extension springs 67 are disposed between the upper frame 23 and the sub frame 27. One extension spring 67 is located at a left side of the sub frame 27 and the other extension spring 67 is located at a right side thereof One end of each extension spring 67 is held at the upper frame 23 and the other end thereof is held at the sub frame 27. These springs 67 bias the sub frame 27 in the upward direction toward the upper frame 23.

A center of each lock link member 68 is rotatably supported by the corresponding guide bracket 61 through a supporting shaft 69, and the lock link member 68 rotates around a horizontal axis which is in parallel with a horizontal direction of the vehicle. A hook portion 68a is formed at an upper end of each lock link member 68, and the end of the cable 45 is connected with a lower end portion of the lock link member 68. The hook portion 68a may engage with the slide member 63 from a forward side and may release the engagement. The upward movement of the slide member 63 due to the extension spring 67 is restricted by the engagement between the hook portion 68a and the slide member 63, thus the sub frame 27 is normally held in a lowered end position of the sub frame 27. Springs 71 are respectively disposed between the lower end portion of the lock link member 68 and the side frame 21 and between the lower end portion of the lock link member 68 and the side flame 22, and each spring 71 biases the corresponding hook portion 68a in a direction that the engagement between the hook portion 68 and the slide member 63 is maintained.

When the lower end portion of the lock link member 68 is pulled rearward by the cable 45 against a biasing force of the spring 71, the lock link member 68 is rotated around the supporting shaft 69 in a counter-clockwise direction in Fig. 3. Consequently, the movement of the slide member 63, restricted by the hook portion 68a, is released. Then, as shown in Fig. 3B, the slide member 63 is slid upward along the guide hole 62 of the guide bracket 61 by a biasing force of the extension spring 67, and the sub frame 27 moves a predetermined distance in an upward direction. In response to the upward movement of the sub frame 27, the headrest body 15 is moved in a diagonally forward direction through the stay holders 25 to be positioned at the protection position where a head of an occupant is restrained to protect his / her neck.

A pressure receiver 30, which is moved due to an input load exerted when the occupant is seated on the seat apparatus for the vehicle 10, is provided at the seatback frame 17 so as to move in a forward and backward direction of the seatback 12. Further, a moving force transmitting mechanism 31 is disposed at a central lower portion of the seatback frame 17. The moving force transmitting mechanism 31 transmits a moving force of the pressure receiver 30 to the headrest 13 when the impact load is exerted on the seatback 12 in the rear-end collision and the pressure receiver 30 is moved.

In the embodiment, the pressure receiver 30 is formed by bending a rod, and is biased in a forward direction of the seatback 12 by a spring (not shown). When the input load exerted by the occupant becomes larger than the biasing force of the spring, the pressure receiver 30 moves to the rear of the seatback 12 against the biasing force of the spring.

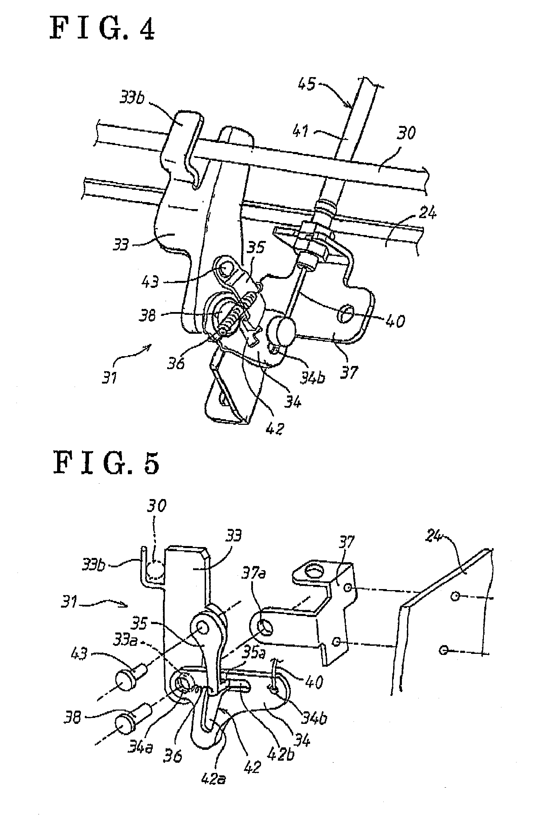

As shown in Figs. 4 and 5, the moving force transmitting mechanism 31 is constructed by an input link member 33, an output link member 34, an operation link member 35 (operation member), an extension spring 36 (biasing member) and a supporting bracket 37. The supporting bracket 37 is fixed to the lower frame 24 of the seatback frame 17.

As shown in Fig. 5, a supporting shaft 38 is fitted into a mounting hole 37a of the supporting bracket 37 along a horizontal axis in parallel with the lower frame 24. The supporting shaft 38 penetrates through fitting holes 33a and 34a, which are respectively formed at a lower end portion of the input link member 33 and one end portion ofthe output link member 34, and the input link member 33 and the output link member 34 rotate around the supporting shaft 38. A connecting portion 33b, engaging with the pressure receiver 30, is provided at an upper end portion of the input link member 33. The input link member 33 is rotated around the supporting shaft 38 in a clockwise direction in Fig. 5 in association with the rearward movement of the pressure receiver 30.

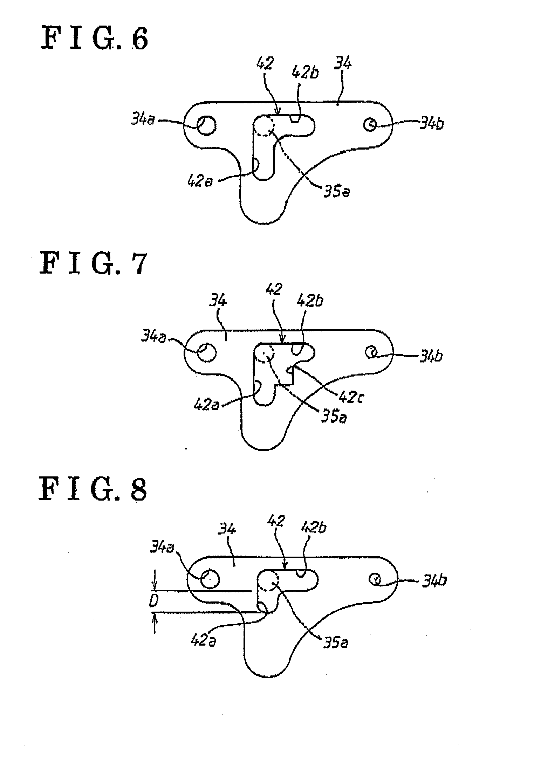

A connecting portion 34b, with which one end of the paired wires 40 is connected, is formed at the other end portion of the output link member 34. The paired wires 40 are inserted into an outer tube 41 fixed to the supporting bracket 37 at one end thereof and extend in an upward direction. As shown in Fig. 6, an L-shaped engaging groove 42 is formed around an intermediate portion between the fitting hole 34a and the connecting portion 34b, and the engaging groove 42 is composed of a cancel groove 42a extending in the up-down direction and a transmitting groove 42b extending continuously from an upper end portion of the cancel groove 42a in the horizontal direction.

The operation link member 35 is rotatably supported on the input link member 33 at its upper end by the supporting shaft 43, which is arranged in parallel to the supporting shaft 38. When an inertial force is exerted on the seat apparatus for the vehicle 10 due to the impact load exerted in the rear-end collision, the operation link member 35 is rotated around the supporting shaft 43 in a counter clockwise direction in Fig. 5. An engaging portion 35a, inserted into the engaging groove 42 of the input link member 33, is provided at the lower end portion of the operation link member 35, and the operation link member 35 is pivotably linked with the output link member 34 in a manner that the engaging portion 35a is movable in the engaging groove 42. Further, the operation link member 35 is constantly biased around the supporting shaft 43 in the clockwise direction in Fig. 5 by the extension spring 36 disposed between the operation link member 35 and the output link member 34. Accordingly, the engaging portion 35a is normally inserted into a center portion of the engaging groove 42, i.e, an upper end portion of the cancel groove 42a.

The supporting shaft 43 is mounted above the supporting shaft 38, and the engaging portion 35a is positioned below the supporting shaft 38. Further, when the input link member 33 is rotated around the supporting shaft 38 in the clockwise direction in Fig. 5, the engaging portion 35a of the operation link member 35 slides along the cancel groove 42a. In the state, even though the pressure receiver 30 rotates the input link member 33 around the supporting shaft 38 in the clockwise direction in Fig. 5, the output link member 34 does not follow the rotation of the input link member 33 and the wires 40 are not operated.

On the other hand, when the operation link member 35 is rotated around the supporting shaft 43 in the counter clockwise direction in Fig. 5 against the biasing force of the extension spring 36, the engaging portion 35a of the operation link member 35 enters the transmitting groove 42b. Thus, if the input link member 33 is rotated around the supporting shaft 38 in the clockwise direction in Fig. 5 in the state, the engaging portion 35a engages with an inner wall of the transmitting groove 42b. Then, the output link member 34 is integrally rotated with the input link member 33 via the operation link member 35, and the pair of wires 40 is pulled downward.

The cable 45 is formed by the wires 40 and the outer tube 41, and the cable 45 extends to an upper portion of the seatback frame 17. The other end portions of each wire 40 are respectively connected with lower end portions of left and right lock link members 68. Thus, when one end of each wire 40 is pulled downward in response to the rotation of the output link member 34, each lock link member 68 is pulled rearward by the other end of each wire 40 against the biasing force of each spring 71 to rotate. Then, the restriction on the upward movement of the slide member 63 is released.

Next, an operation according to the foregoing first embodiment will be described. When an occupant is roughly seated on the seatback 12 or the seatback 12 is strongly pressed by his /her knee or elbow, the pressure receiver 30 is moved to the rear of the seatback 12 due to the input load exerted by the occupant against the biasing force of the spring (not shown). Consequently, the input link member 33, engaged with the pressure receiver 30 through the connecting portion 33b, is rotated around the supporting shaft 38 in the clockwise direction in Fig. 5.

However, the operation link member 35 is normally held in an initial position shown in Fig, 5 by the biasing force of the extension spring 36 and the engaging portion 35a of the operation link member 35 enters the cancel groove 42a in conjunction with the rotation of the input link member 33. As a result, even though the input link member 33 is rotated, the output link member 34 is not rotated. Therefore, the malfunction is prevented.

When the vehicle is struck in the rear and a large impact load is exerted on the seatback 12 from the rear to the front of the vehicle, the operation link member 33 is rotated in the counter clockwise direction in Fig. 5 against the biasing force of the extension spring 36. Consequently, the engaging portion 35a of the operation link member 35 enters the transmitting groove 42b of the output link member 34 to slide in the transmitting groove 42b.

Meanwhile, the occupant is strongly pressed against the seatback 12 in the rear-end collision, the pressure receiver 30 is moved to the rear of the seatback 12 due to the input load exerted by the occupant against the biasing force of the spring (not shown). Thus, the input link member 33, engaging with the pressure receiver 30 through the connecting portion 33b, is rotated around the supporting shaft 38 in the clockwise direction in Fig. 5.

At that point, the engaging portion 35a of the operation link member 35 supported by the input link member 33 enters into the transmitting groove 42b of the output link member 34. Thus, if the input link member 33 is rotated, the output link member 34 is integrally rotated with the input link member 33 through the operation link member 35, and the one end of the wires 40 is pulled downward. Consequently, each lower end portion of the left and right lock link members 68 is pulled rearward through the wire 40 against the biasing force of the spring 71. Then, the engagement is released between the hook portion 68a and the slide member 63 as shown in Fig. 3B. Once the engagement is released, the slide member 63 is slid upward along the guide hole 62 of the guide bracket 61 by the biasing force of the extension spring 67, and the sub frame 27 moves the predetermined distance in the upward direction. As a result, the headrest body 15 is moved in the diagonally forward direction through the stay holders 25 to be positioned at the protection position where the head of the occupant is restrained for protecting his / her neck.

According to the first embodiment, the operation link member 35 is moved to a position that the input link member 33 is operable, i.e. an operating position, only when the impact load due to the rear-end collision is exerted on the seatback 12. If the impact load is not exerted, the operation link member 35 is positioned at the initial position. Thus, when the seatback 12 is strongly pressed due to the input load exerted by the occupant in the state that the impact load is exerted, the output link member 34 follows the rotation of the input link member 33 to rotate. Then, the headrest moving unit 65 is operated to move the headrest body 15 to the protection position. Namely, even though the occupant exerts a strong load on the seatback 12 in the situation that the impact load is not exerted, the output link member 34 does not follow the rotation of the input link member 33 because the operation link member 35 is positioned at the initial position. Thus, the headrest moving unit 65 is not operated. Therefore, the malfunction that the headrest body 15 is mistakenly moved to the protection position by seating actions of the occupant is assuredly prevented.

Further, the moving force transmitting mechanism 31 is disposed at a lower portion ofthe seatback 12. Thus, the impact load exerted on the vehicle in the rear-end collision is promptly detected, and the operation link member 35 is operated. Therefore, the headrest body 15 is promptly moved to the protection position.

Furthermore, according to the first embodiment, the output link member 34 includes the engaging groove 42 having the cancel groove 42a and the transmitting groove 42b. The engaging portion 35a of the operation link member 35, engaging with the engaging groove 42, engages with the cancel groove 42a when the input link member 33 is rotated in the state that the operation link member 35 is positioned at the initial position. On the other hand, when the input link member 33 is rotated in the state that the operation link member 35 is positioned at the operating position, the engaging portion 35a engages with the transmitting groove 42b. Thus, when the occupant is roughly seated, or when the seatback is strongly pressed by the occupant's knee or elbow, the engaging portion 35a of the operation link member 35 enters the cancel groove 42a. Accordingly, the rotation of the input link member 33 is not transmitted to the output link member 34, thus preventing the malfunction assuredly.

Fig. 7 shows a first modification of the first embodiment, and the form of the engaging groove 42 formed at the output link member 34 is determined considering weight difference of occupants. In other words, when a heavyweight person is seated, even in the normal driving operation, the pressure receiver 30 is slightly moved to the rear of the seatback 12 due to the input load exerted by the occupant. Due to this movement, the engaging portion 35a of the operation link member 35 may slightly enter the cancel groove 42a of the engaging groove 42.

Thus, according to the first modification shown in Fig. 7, a stepwise wide portion 42c is provided at a connecting portion in which the cancel groove 42a connects with the transmitting groove 42b. The stepwise wide portion 42c allows the rotation of the input link member 33 to be transmitted to the output link member 34 even though the vehicle is struck in the rear in a state that engaging portion 35a of the operation link member 35 slightly enters the cancel groove 42a of the engaging groove 42.

According to the first modification, in case that a heavyweight person is seated, the engaging portion 35a of the operation link member 35 slightly enters the cancel groove 42a. Even in that state, if the impact load is exerted on the seatback 12 in the rear-end collision, the engaging portion 35a of the operation link member 35 is moved to the wide portion 42c. Thereafter, the input load from the occupant is strongly exerted on the seatback 12, thereby rotating the output link member 34 through the stepwise portion of the wide portion 42c.

Fig. 8 shows a second modification of the first embodiment. Depth D of the cancel groove 42a of the engaging groove 42 formed at the output link member 34 is set to an amount that accommodates a movement of the operation link member 35 caused by a load exerted on the seatback 12 when the heavyweight occupant is seated and allows the engaging portion 35a to engage with an internal lower end portion of the cancel groove 42a to operate the output link member 34.

According to the second modification, when the heavyweight person is seated, the engaging portion 35a of the operation link member 35 enters to a vicinity of a bottom portion of the cancel groove 42a. If the vehicle is struck in the rear in this state, the operation link member 35 is not rotated. However, the input load is exerted by the occupant in the rear-end collision, and the engaging portion 35a of the operation link member 35 engages with the bottom portion of the cancel groove 42a. Consequently, the output link member 34 is directly rotated. When a lightweight person is seated, the system operates in the same manner as in the first embodiment.

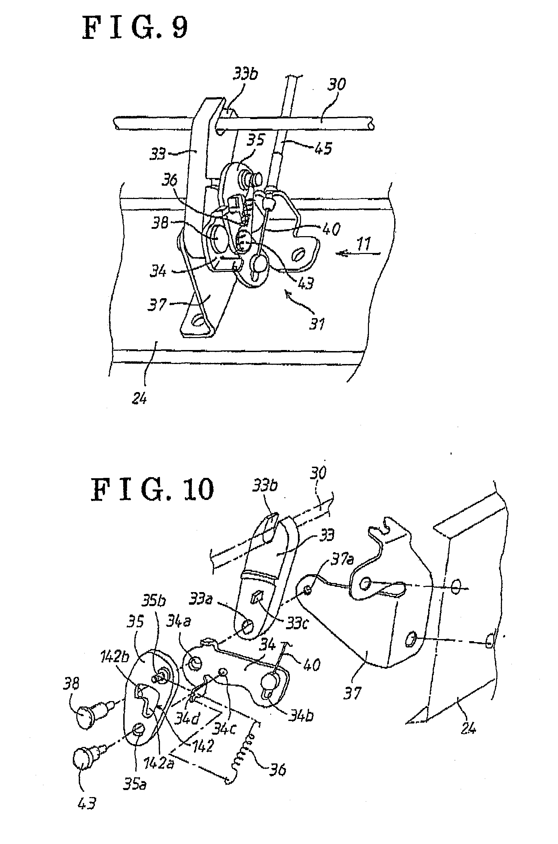

Next, a second embodiment of the invention will be described with reference to Fig. 9 to Fig. 12. The second embodiment is different from the first embodiment in that the operation link member 35 of the moving force transmitting mechanism 31 is rotatably supported by the output link member 34. In addition, an engaging groove 142 (corresponding to the engaging groove 42 of the first embodiment) is formed at the operation link member 35, and an engaging projection 33c (corresponding to the engaging portion 35a of the first embodiment) is formed at the input link member 33.

As shown in Figs. 9, 10 and 11, according to the second embodiment, the moving force transmitting mechanism 31 is mainly constructed by the input link member 33, the output link member 34, the operation link member 35 (operation member), the extension spring 36 and the supporting bracket 37. The supporting bracket 37 is fixed to the lower frame 24 of the seatback frame 17.

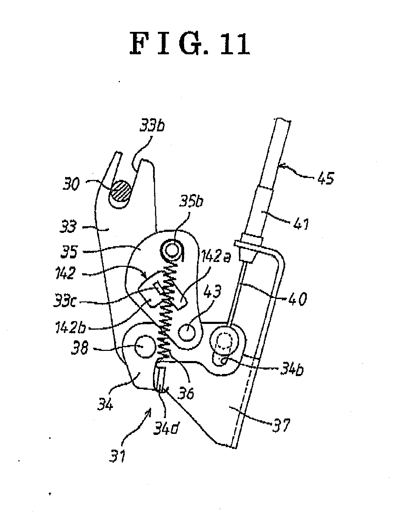

The supporting shaft 38 is fitted into the mounting hole 37a of the supporting bracket 37 (shown in Fig. 10) along a horizontal axis in parallel with the lower frame 24. The supporting shaft 38 penetrates through fitting holes 33a and 34a, which are respectively formed at the lower end portion of the input link member 33 and the one end portion of the output link member 34, and the input link member 33 and the output link member 34 rotate around the supporting shaft 38. The connecting portion 33b, engaging with the pressure receiver 30, is provided at the upper end portion of the input link member 33. The input link member 33 is rotated around the supporting shaft 38 in the clockwise direction in Fig. 11 in association with the rearward movement of the pressure receiver 30.

The connecting portion 34b, with which the ends of the paired wires 40 are connected, is formed at the other end portion of the output link member 34. The paired wires 40 are inserted into the outer tube 41 fixed to the supporting bracket 37 at one end thereof and extend in the upward direction.

As shown in Fig. 10, the supporting shaft 43 is fitted into a mounting hole 34c of the output link member 34 so as to be in parallel to the supporting shaft 38. The supporting shaft 43 penetrates into a fitting hole 35a formed at the lower end portion of the operation link member 35, and the operation link member 35 rotates around the supporting shaft 43. The supporting shaft 43 is disposed between a fitting hole 34a and a connecting portion 34b. The supporting shaft 43, the fitting hole 34a, and the connecting portion 34b are normally aligned along a substantially horizontal line. When an inertial force is exerted on the seat apparatus for the vehicle 10 due to the impact load exerted in the rear-end collision, the operation link member 35 is rotated around the supporting shaft 43 in a clockwise direction in Fig. 11.

An L-shaped engaging groove 142 is formed at the operation link member 35, and the engaging groove 142 is composed of a cancel groove 142a extending in a substantially vertically direction and a transmitting groove 142b extending continuously from an upper end portion of the cancel groove 142a in a substantially horizontal direction. The engaging projection 33c, inserted into the engaging groove 142 of the operation link member 35, is provided at a center of the input link member 33, and the operation link member 35 is pivotably linked with the input link member 33 in a manner that the engaging groove 142 is movable relative to the engaging projection 33c. Hook portions 34d and 35b are respectively provided at the output link member 34 and the operation link member 35, and the extension spring 36 is disposed between the hook portions 34d and 35b. The operation link member 35 is constantly biased around the supporting shaft 43 in a counter clockwise direction in Fig. 11 by the extension spring 36. In other words, one end of the extension spring 36 is hooked on the hook portion 34d provided at the output link member 34 and the other end thereof is hooked on the hooked portion 35b provided at the operation link member 35. The engaging projection 33c is normally inserted into the center portion of the engaging groove 142, i.e. the upper end portion of the cancel groove 142a, by the biasing fore of the extension spring 36.

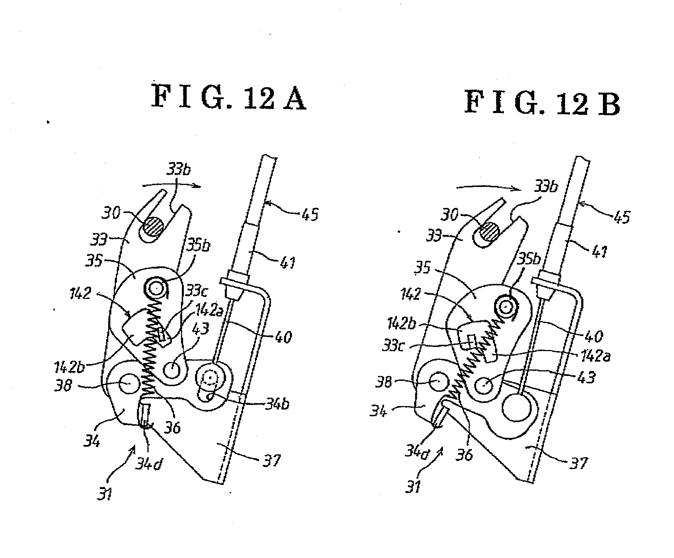

In the initial position of the operation link member 35 shown in Fig. 11, when the pressure receiver 30 is moved to the rear of the seatback 12 and the input link member 33 is rotated around the supporting shaft 38 in the clockwise direction in Fig. 11, the engaging projection 33c slides along the cancel groove 142a of the operation link member 35 as shown in Fig. 12A. In this state, the output link member 34 does not follow the rotation of the input link member 33, and the pair of wires 40 is not pulled downward.

On the other hand, when the operation link member 35 is rotated around the supporting shaft 43 in the clockwise direction in Fig. 11 by the inertial force against the biasing force of the extension spring 36, the engaging projection 33c of the input link member 33 enters the transmitting groove 142b of the operation link member 35. Thus, if the input link member 33 is rotated around the supporting shaft 38 in the clockwise direction in Fig. 11 in the above-mentioned state, the engaging projection 33c engages with an internal wall of the transmitting groove 142b. Then, as shown in Fig. 12B, the output link member 34 is integrally rotated with the input link member 33 through the operation link member 35, and the pair of wires 40 is pulled downward.

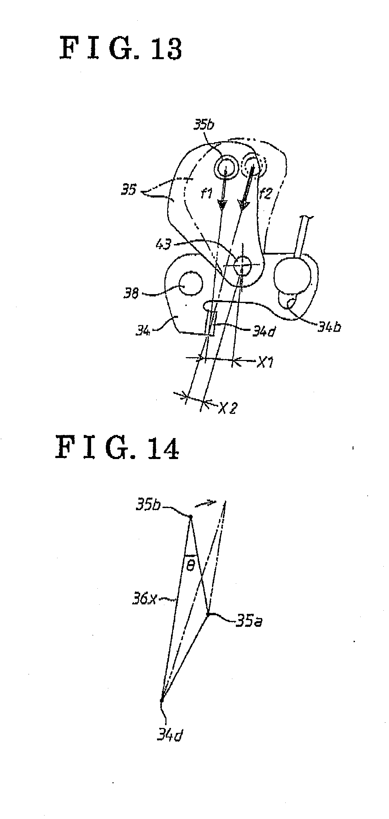

As shown in Fig. 14, an extension direction 36x of the extension spring 36, biasing the operation link member 35, is determined so as to form an acute angle θ with a line connecting a rotation center 35a of the operation link member 35 (the supporting shaft 43) with the hook portion 35b which is provided at the operation link member 35 for hooking the extension spring 36. Thus, a moment exerted on the operation link member 35 in the initial position direction is gradually reduced in conjunction with the rotation of the operation link member 35. In other words, the extension spring 36 is disposed so that the rotation moment (f1 • xl) in the initial position of the operation link member 35 (a position indicated by a solid line in Fig. 13) is larger than the rotation moment (f2 ■ x2) in the operating position of the operation link member 35 (a position indicated by a double chain line in Fig. 13) shown in Fig. 13. This configuration allows the operation link member 35 to be rotated more quickly by the inertial force.

According to the second embodiment, the operation link member 35, operated by the inertial force, is supported by the output link member 34. Accordingly, the impact load of the rear-end collision exerted on the vehicle body is transmitted from a vehicle floor to the output link member 34 through the supporting shaft 38 of the supporting bracket 37 fixed to the seatback frame 17 having a rigid supporting relation with the vehicle floor. Further, the impact load transmitted to the supporting shaft 38 is directly transmitted to the supporting shaft 43 which is positioned immediately lateral to the supporting shaft 38, Thus, the impact load is transmitted to the operation link member 35 supported by the supporting shaft 43 without loss, and the responsiveness of the operation link member 35 against the impact load may be improved.

According to the second embodiment, as shown in Fig. 14, the extension direction 36x of the extension spring 36 biasing the operation link member 35 is determined so as to form the acute angle θ with the line connecting the rotation center 35a (the supporting shaft 43) of the operation link member 35 with the hook portion 35b which is provided at the operation link member 35 for hooking the extension spring 36. Thus, the moment exerted on the operation link member 35 in the initial position direction is gradually reduced in conjunction with the rotation of the operation link member 35. This configuration allows the operation link member 35 to be rotated more quickly by the inertial force, and the responsiveness of the operation link member 35 is improved.

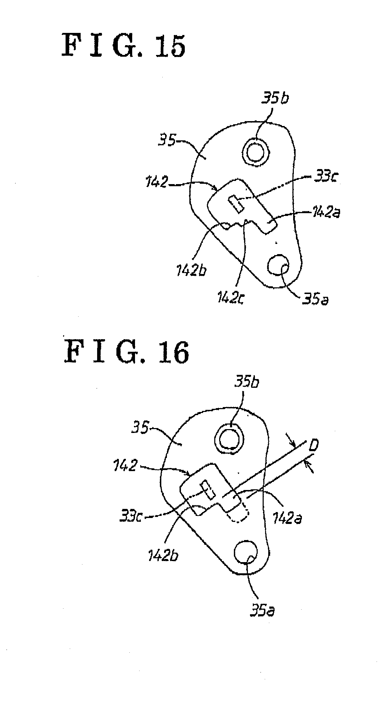

Fig. 15 shows a first modification of the second embodiment, a stepwise wide portion 142c is provided at a connecting portion between the cancel groove 142a and the transmitting groove 142b of the engaging groove 142 formed at the operation link member 35. The modification allows the rotation movement of the input link member 33 to transmit to the output link member 34 even though the vehicle is struck in the state that the engaging projection 33c of the input link member 33 slightly enters the cancel groove 142a.

Basically, the first modification of the second embodiment achieves the same effect as the one described in the first modification of the first embodiment shown in Fig. 7 except that the engaging groove 142 and the engaging projection 33c are respectively provided at the operation link member 35 and the input link member 33.

Further, Fig. 16 shows a second modification of the second embodiment. Depth D of the cancel groove 142a of the engaging groove 142 formed at the operation link member 35 is set to an amount that accommodates a movement of the input link member 33 caused by a load exerted on the seatback 12 when the heavyweight occupant is seated and allows the engaging portion 33c to engage with an internal lower end portion of the cancel groove 142a to operate the output link member 34. Basically, the second modification of the second embodiment achieves the same effect as the one described in the second modification of the first embodiment.

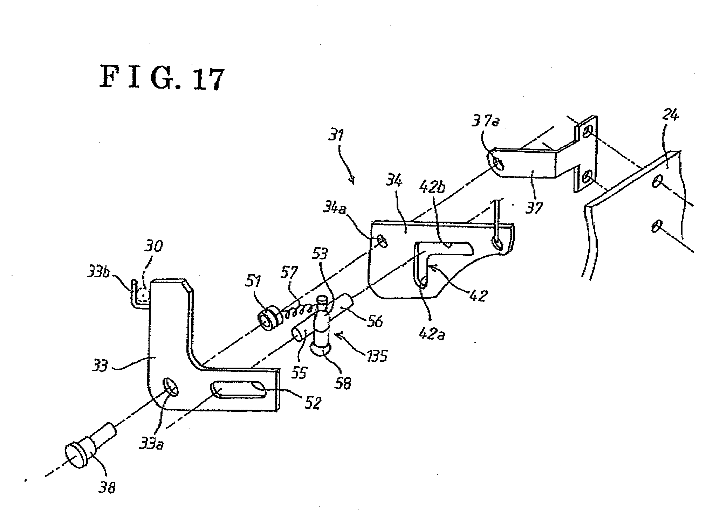

A third embodiment of the invention will be described with reference to Fig. 17. The third embodiment is different from the first and second embodiments in that an operation member having a weight 135 (operation member) is provided instead of the operation link member 35 constructing the moving power transmitting mechanism 31. Thus, hereinafter, the difference between the third and the first embodiment will be mainly described. The same reference numerals will be provided for the same components which are used in the first embodiment, and description for the same components will be omitted.

The supporting shaft 38 penetrates through a fitting hole 33a of the input link member 33, a bush 51, and a fitting hole 34a of the output link member 34 to bye mounted at the supporting bracket 37 which is fixed to the lower frame 24 of the seatback frame 17, and the input link member 33 and the output link member 34 are rotatably supported by the supporting shaft 38 having a predetermined distance therebetween. As with the first embodiment, the L shaped engaging groove 42, composed of the cancel groove 42a extending in the up-down direction and the transmitting groove 42b extending in the horizontal direction, is formed at the output link member 34. An elongated groove 52, positionally corresponding to the transmitting groove 42 of the output link member 34 when the moving force transmitting mechanism 31 is in an original position, is horizontally formed in the input link member 33.

The operation member having the weight 135 has a center block portion 53 disposed at a space between the input link member 33 and the output link member 34, and axial end portions 55 and 56 are provided at both ends of the center block portion 53 so as to be aligned on an identical axial line. The axial end portion 55 engages with the elongated groove 52 of the input link member 33, and the axial end portion 56 engages with the engaging groove 42 of the output link member 34. An extension spring 57 (biasing force) is disposed between the center block portion 53 and the bush 51, and the axial end portions 55 and 56 are respectively engaged with one end of the elongated groove 52 and a connecting portion between the cancel groove 42a and the transmitting groove 42b by the biasing force of the extension spring 57. A weight 58 is provided at a lower end portion of the center block portion 53. When the inertial force is exerted in the rear-end collision, the operation member having the weight 135 is moved against the biasing force of the extension spring 57. Specifically, the operation member having the weight 135 is moved along the elongated groove 52 and the transmitting groove 42b.

The third embodiment is configured as described above. Thus, when the vehicle is struck in the rear, the impact load of the rear-end collision is exerted on the seatback 12. Consequently, the operation member having the weight 135 is slid along the elongated groove 52 and the transmitting groove 42b against the biasing force of the extension spring 57. If the occupant is strongly pressed against the seatback 12 and the pressure receiver 30 is moved in the aforementioned state, the input link member 33 is rotated around the supporting shaft 38 in the clockwise direction in Fig. 9 through the connecting portion 33b. In response to the rotation of the input link member 33, the output link member 34 is integrally rotated with the input link member 33 though the operation member having the weight 135. As a result, the one end of the wires 40 is pulled downward: As with the first embodiment, after the wires 40 are pulled downward, each lock link member 68 rotates to release the lock of the slide member 63. The headrest body 15 rises in the diagonally forward direction to restrain the occupant's head for protecting his or her neck.

As with the first embodiment, in the third embodiment, when the occupant is roughly seated against the seatback 12, or when the seatback 12 is strongly pressed by the occupant's knee or elbow, the operation member having the weight 135 enters the cancel groove 42a and the output link member 34 is not rotated. Therefore, the malfunction is prevented.

According the third embodiment, the operation member having the weight 135 is operated by the impact load of the rear-end collision to prevent the malfunction when the occupant is roughly seated against the seatback 12, or when the seatback 12 is strongly pressed by the occupant's knee or elbow. In addition, rattling or noise, caused due to free movement of the operation member having the weight 135, is prevented by biasing the operation member having the weight 135 by the extension spring 57.

In the foregoing embodiments, the one end of the cable 45 is connected with the lock link members 68. When the cable 45 is pulled by the output link member 34, each lock link member 68 is rotated to release the movement of the slide member 63 restricted by the hook 68a. Consequently, the headrest body 15 is moved upward with the slide member 63 by the extension spring 67. However, the configuration is not limited to the form. For example, the cable 45 may be directly connected with the slide member 63. In the case, the headrest body 15 is moved upward with the slide member 63 by pulling the cable 45.

In the foregoing embodiments, the movement of the output link member 34 is transmitted to the side of the headrest 13. However, the transmitting component is not limited to a cable. For example, a link mechanism may be employed.

The embodiments of the invention have been described. However, the form of the invention is not limited to the foregoing embodiment. Various forms may be employed to implement the invention within the scope of the patent. A seat apparatus for a vehicle includes a headrest body (13), a stay (14), a pressure receiver (30), a moving force transmitting mechanism (31), and a headrest moving unit (65), wherein the moving force transmitting mechanism (31) includes an input link member (33), an output link member (34) operating the headrest moving unit (65), an operation member (35, 135) linked with the input link member (33) and the output link member (34) to be movable between initial and operating positions, the operating member (35, 135) preventing the output link member (34) from following the rotation of the input link member (33) in the initial position and allowing the output link member (35) to follow the rotation of the input link member (33) in a case that the operation member (35, 135) is moved to the operating position when the impact load is exerted at the initial position.

## Claims

1. A seat apparatus for a vehicle comprising:
a headrest body (15) located above a seatback (12) of a vehicle seat;
a stay (14) supporting the headrest body (15) on the seatback (12);
a pressure receiver (30) disposed in the seatback (12) and moved due to an input load exerted by an occupant seated on the vehicle seat;
a moving force transmitting mechanism (31) disposed at a lower position of the seatback (12) and transmitting a moving force of the pressure receiver (30) when an impact load is exerted on the seatback (12) in a rear-end collision and the pressure receiver (30) is moved; and
a headrest moving means (65) moving the headrest body (15) to a protection position when the moving force is transmitted by the moving force transmitting mechanism (31), wherein the moving force transmitting mechanism (31) includes:
an input link member (33) rotated in association with a movement of the pressure receiver (30);
an output link member (34) rotatably supported by the input link member (33) and connected with the headrest moving means (65), the output link member (34) rotating in conjunction with the rotation of the input link member (33) to operate the headrest moving means (65);
an operation member (35, 135) linked with the input link member (33) and the output link member (34) so as to be movable between an initial position and an operating position, the operating member (35, 135) preventing the output link member (34) from following the rotation of the input link member (33) in the initial position and allowing the output link member (34) to follow the rotation of the input link member (33) in case that the operation member (35, 135) is moved to the operating position when the impact load is exerted on the seatback (12) in the rear-end collision against a biasing force of a biasing member (36) holding the operation member (35, 135) in the initial position.

2. A seat apparatus for a vehicle according to Claim 1, wherein the operation member (35, 135) is formed by an operation link member (35) rotatably supported by the output link member (34) and linked with the input link member (33) in a manner that the operation link member (35) is pivotably movable between the initial position and the operating position.

3. A seat apparatus for a vehicle according to Claim 1, wherein the operation member (35, 135) is formed by an operation link member (35) rotatably supported by the input link member (33) and linked with the output link member (33) in a manner that the operation link member (35) is pivotably movable between the initial position and the operating position.

4. A seat apparatus for a vehicle according to Claim 2, wherein the operation link member (35) includes an engaging groove (142) having a cancel groove (142a) and a transmitting groove (142b), and the input link member (33) includes an engaging portion (33c) engaging with the engaging groove (142), wherein the engaging portion (33c) engages with the cancel groove (142a) when the operation link member (35) is positioned at the initial position and the input link member (33) is rotated, and the engaging portion (33c) engages with the transmitting groove (142b) when the operation link member (35) is positioned at the operating position and the input link member (33) is rotated.

5. A seat apparatus for a vehicle according to Claim 3, wherein the output link member (34) includes an engaging groove (42) having a cancel groove (42a) and a transmitting groove (42b), and the operation link member (35) includes an engaging portion (35a) engaging with the engaging groove (42), wherein the engaging portion (35a) engages with the cancel groove (42a) when the operation link member (35) is positioned at the initial position and the input link member (33) is rotated, and the engaging portion (35a) engages with the transmitting groove (42b) when the operation link member (35) is positioned at the operating position and the input link member (33) is rotated.

6. A seat apparatus for a vehicle according to Claim 1, wherein the operation member (35, 135) is formed by an operation member having a weight (135) including axial portions (55, 56) at both ends thereof, and the output link member (34) includes an engaging groove (42) having a cancel groove (42a) and a transmitting groove (42b), wherein the input link member (33) includes an elongated groove (52) positionally corresponding to the transmitting groove (42b), and the axial portions (55, 56) at both ends of the operation member having the weight (135) slidably engage with the engaging groove (42) and the elongated groove (52), respectively.

7. A seat apparatus for a vehicle according to any one of Claims 4 and 5, wherein the engaging groove (42, 142) includes a stepwise wide portion (42c, 142c) at a connecting portion between the cancel groove (42a, 142a) and the transmitting groove (42b, 142b).

8. A seat apparatus for a vehicle according to any one of Claims 4 and 5, wherein depth of the cancel groove (42b, 142b) is determined so as to correspond to a moving amount of the engaging portion (35a) of the operation link member (35) when an input load is exerted on the seatback (12) by a heavyweight person.

9. A seat apparatus for a vehicle according to any one of Claims 4 and 5, wherein the biasing member (36) biasing the operation link member (35) is disposed so as to form an acute angle with respect to a line connecting a rotation center (35a) of the operation link member (35) with a hook portion (35b) that the biasing member (36) is hooked, and a moment exerting on the operation link member (35) in the initial position direction is reduced in conjunction with rotation of the operation link member (35).
